# FASCICULE DE BREVET EUROPEEN

(11) **EP 3 098 162 B1**
(45) Date de publication et mention de la délivrance du brevet: **11.07.2018**
(21) Numéro de dépôt: 15305788.0
(22) Date de dépôt: 26.05.2015
(51) Int. Cl.: B64C 39/04, B64C 39/08, B64D 27/20

(54) **AVION A FUSELAGE A CORPS PORTANTS**
FLUGZEUG MIT RUMPF, DER MIT AUFTRIEBSKÖRPERN AUSGESTATTET IST
AIRCRAFT WITH LIFTING BODY FUSELAGE

(43) Date de publication de la demande: 30.11.2016
(73) Titulaire: AIRBUS (SAS), 31700 Blagnac (FR)
(72) Inventeur: Geneste, Jean-François, 31200 Toulouse (FR)
(74) Mandataire: Gicquel, Olivier Yves Gérard

(56) Documents cités:
- EP-A1- 2 799 335
- EP-A2- 0 997 376
- EP-A2- 1 167 183
- WO-A1-03/080436
- BE-A- 366 304
- CA-C- 1 314 035
- DE-A1-102012 002 310
- FR-A1- 2 338 187
- FR-A1- 2 623 468
- FR-A1- 2 935 680
- GB-A- 1 044 922
- US-A- 2 944 764
- US-A- 3 093 348
- US-A1- 2004 195 433
- US-A1- 2006 016 931
- US-A1- 2014 158 816
- US-A1- 2014 263 831

## Description

### DOMAINE DE L'INVENTION

L'invention appartient au domaine des avions et de l'optimisation de leurs formes aérodynamiques.

Plus particulièrement l'invention concerne un avion dont le fuselage assure une portance aérodynamique.

### ÉTAT DE L'ART

Les caractéristiques aérodynamiques sont essentielles pour les performances d'un aéronef destiné à se déplacer en mouvement dans une masse d'air.

La résultante des forces aérodynamiques dans le plan vertical de symétrie d'ensemble de l'aéronef, plan dans lequel se situe le vecteur de la vitesse par rapport à l'air dans le cas du vol symétrique, est généralement décomposée en deux forces principales : la traînée D et la portance L.

La portance L s'oppose au poids de l'aéronef, la traînée D s'oppose à l'avancement de l'aéronef dans la masse d'air.

A l'équilibre, en régime de vol horizontal à vitesse constante d'un avion, la portance est donc égale au poids et la traînée est égale à la poussée produite par les moteurs de propulsion.

En outre il peut exister des forces aérodynamiques latérales associées au dérapage et des couples aérodynamiques qui ont une importance sur la stabilité du vol de l'aéronef et pour son équilibrage.

Il est avantageux de minimiser la traînée D pour la portance L nécessaire, et ainsi de diminuer la résistance à l'avancement dans des conditions données de vol de l'avion.

Le rapport L/D, bien connu des aérodynamiciens, détermine la finesse qui en un point de vol donné est une caractéristique aérodynamique directement lié au rendement de l'avion.

L'amélioration de ce rapport L/D est donc une constante dans le domaine aérodynamique.

Les voies de progrès dans ce domaine depuis les origines de l'aérodynamique ont été la recherche d'une diminution de la traînée du fuselage par des formes toujours plus optimisées qui ont permis de réduire l'impact du fuselage sur la traînée et de la diminution de la traînée des ailes induite par la portance.

Les théories connues montrent que la traînée induite par la portance diminue avec l'allongement géométrique de l'aile, rapport du carré de l'envergure de l'aile à sa surface, et est fonction de la répartition de la portance en envergure, une répartition elliptique étant un optimum théorique.

Il a ainsi été réalisé des avions avec des ailes de grand allongement géométrique, tel que l'avion Hurel-Dubois HD34 avec un allongement de 20, et de manière plus fréquente les planeurs de compétition dont les allongements dépassent parfois la valeur de 50.

La recherche d'allongements extrêmes s'avère cependant trouver des limites pratiques en raison de la résistance structurale des ailes. Pour une surface donnée de l'aile, augmenter l'allongement conduit à diminuer les cordes aérodynamiques de cette aile et par conséquence leurs épaisseurs et il devient difficile de construire une aile suffisamment solide pour résister aux efforts de flexion à l'encastrement que subit une aile de grand allongement.

En pratique, pour les avions civils de transport les allongements des ailes sont de manière courante compris entre 7 et 10.

Si l'aile est historiquement destinée à réaliser la portance nécessaire au vol, le fuselage est généralement considéré comme un inconvénient aérodynamique générateur de traînée, traînée de forme et traînée de frottement principalement, qui est subie pour répondre aux exigences des charges utiles.

La nécessité pour les avions civils de transporter des passagers conduit à des fuselages généralement cylindriques, souvent de sections circulaires ou multi-lobes en raison de la pressurisation nécessaire des cabines pour les vols en altitude.

De tels fuselages ne génèrent pas de portance significative tant en raison de leurs formes de sections circulaires, ou voisines, que du fait qu'ils sont le plus souvent maintenus en vol à une incidence proche de zéro.

Il a également été imaginé de réaliser des avions sans fuselage en agençant dans une aile suffisamment épaisse les volumes nécessaires pour la charge utile.

Ce concept dit d'aile volante, dont un exemple est illustré dans la demande de brevet publiée sous le numéro FR 2 909 358, s'avère potentiellement adapté à des aéronefs de grandes capacités permettant de combiner une aile de grande surface et une épaisseur suffisante sans être trop pénalisante sur le plan aérodynamique.

Il a également été considéré de réaliser, par exemple dans la demande de brevet internationale WO 97/43176, ou le brevet EP 1 167 183 ou encore BE 366 304 des avions avec des ailes et un fuselage comportant au moins une partie en forme de profil d'aile pour que le fuselage participe à la portance de l'avion. Dans de telles configurations, la portance apportée par le fuselage est faible et les contraintes sont importantes sur la forme du fuselage qui est en pratique peu adaptée aux charges utiles, peu adaptée aux contraintes de pressurisation et n'apporte qu'un faible bénéfice aérodynamique du fait de la très faible envergure, et donc du faible allongement aérodynamique, du fuselage.

Le brevet US 3 093 348 décrit un avion hypersonique présentant une cellule en profil de flèche avec un fuselage conique et une aile haute.

Il est également connu des solutions à plusieurs fuselages juxtaposés et maintenus séparés par des formes aérodynamiques en profil d'aile, pourvues ou non d'ailes extérieures comme par exemple dans US 2 944 764, ou US 2006/016931, ou encore FR 2 935 680 ou WO 03/080436. Toutefois ces solutions relèvent d'architectures conventionnelles dans lesquelles les fuselages sont de formes conventionnelles comportant une partie essentiellement cylindrique de section circulaire n'apportant aucune portance significative, la portance étant assurée par les ailes.

GB 1 044 922 décrit un autre forme d'un avion comportant deux fuselages articulés à l'avant pour former un angle variable. Les fuselages présentent des formes coniques de révolution et la portance est assurée par une aile intermédiaire dont la surface effective dépend de l'angle entre les fuselages.

Il a également été étudié, en particulier pour la réalisation de corps de rentrée atmosphérique planant, des fuselages portant dépourvus d'aile. Un exemple d'un tel fuselage portant est illustré par le prototype de planeur M2F1 développé par la NASA.

De forme Delta en vue de dessus, le fuselage de cet appareil, en l'occurrence un planeur pour le M2F1, présente une forme des sections, perpendiculaires à l'axe longitudinal, arrondie dans la partie inférieure et aplatie dans la partie supérieure, donnant au fuselage une forme d'ensemble d'un demi tronc de cône de section sensiblement circulaire coupé par un plan axial horizontal de l'avion.

Toutefois un tel appareil, démonstrateur d'un fuselage portant n'est pas adapté à une utilisation industrielle du transport aérien en raison d'une finesse en vol de l'ordre de 3 lorsque les avions de transport on en général des finesses comprises entre 15 et 20.

### EXPOSÉ DE L'INVENTION

La présente invention est définie par la revendication indépendante et apporte une amélioration aux performances aérodynamiques par rapport à celles des avions d'architectures conventionnelles.

L'avion de l'invention comporte un fuselage et une pluralité de surfaces portantes.

En outre, le fuselage comporte au moins deux corps portants, juxtaposés dans un plan horizontal d'un système d'axe de référence XYZ lié à l'avion, les au moins deux corps portants étant maintenus entre eux par toutes ou parties des surfaces portantes.

Il est ainsi, pour un volume aménageable donné, produit par le fuselage une portance qui se combine à la portance des surfaces portantes et qui permet de diminuer les dimensions des surfaces portantes nécessaires pour réaliser une mission donnée. Selon l'invention, chaque corps portant présente une forme d'ensemble de demi-cône tronqué, dont des sections perpendiculaires à un axe longitudinal du cône présentent une forme arrondie dans une partie inférieure et aplatie dans une partie supérieure, une partie effilée du demi-cône étant située du côté de l'extrémité avant de l'avion et une partie tronquée étant située du côté de l'extrémité arrière de l'avion, la partie tronquée étant en outre d'une hauteur HC, suivant une direction verticale définie par un axe vertical Z du système d'axe de référence, inférieure à la hauteur théorique de la forme conique à la position considérée sur l'axe longitudinal.

Il est ainsi obtenu une participation des corps portants à la portance de l'avion avec un effet limité sur la traînée induite par cette portance du fait de la finesse en vol des corps portants.

Des formes de réalisation préférées font l'objet des revendications dépendantes.

Dans une forme de réalisation, toutes ou parties des surfaces portantes comportent des parties en porte-à-faux en formes d'ailes allongées en envergure sur des côtés externes des corps portants par rapport à un axe longitudinal de l'avion.

Les surfaces portantes nécessaires à la portance aérodynamique sont ainsi réparties entre les corps portants et sur des bords externes de corps portants pour une meilleure répartition des charges liées à la masse par rapport aux efforts d'origine aérodynamique.

Dans une forme de réalisation, un corps portant comporte au moins une entrée d'air située sur une surface dudit corps portant, dans une partie arrière dudit corps portant dans laquelle une hauteur du corps portant décroît vers l'arrière.

Avantageusement l'entrée d'air est du type NACA.

Il est ainsi prélevé sur une paroi du corps portant, dans une zone d'intrados avec des pressions d'air augmentées, l'air nécessaire au fonctionnement d'équipements installés dans la zone arrière du corps portant, par exemple un moteur de propulsion, un groupe auxiliaire de puissance, un groupe de conditionnement d'air, ou autre équipement nécessitant une ventilation pour son bon fonctionnement.

Dans une forme de réalisation, au moins un moteur est agencé dans une partie arrière d'un corps portant de sorte à générer une force opposée à la traînée aérodynamique en vol de l'avion.

La mise en oeuvre de deux corps portants séparés physiquement dans la partie arrière de l'avion permet ainsi d'intégrer des moteurs de propulsion, par exemple réacteur ou turbopropulseurs, avec une ségrégation physique comparable à ce qui est connu dans le cas de propulseurs fixés sur des ailes d'avion, sans perturber significativement l'écoulement aérodynamique ni sur les surfaces portantes, ni sur les corps portants.

Dans une forme de réalisation, les surfaces portantes sont agencées par rapport au fuselage pour former une surface portante à l'avant et pour former deux surfaces portantes superposées, au moins partiellement, à l'arrière.

Il est ainsi réparti des surfaces portantes de manière cohérente avec les répartitions de masses de l'avion pour assurer l'équilibrage et le contrôle en vol.

Suivant un mode de réalisation, les axes longitudinaux de deux corps portant convergent vers l'avant et se rejoignent dans une partie commune du fuselage.

Dans cette configuration, avantageusement une zone de passage d'un corps portant à un autre est aménagée dans la partie commune de fuselage pour permettre la circulation de personnes.

Il est ainsi obtenu une unité fonctionnelle du fuselage malgré sa constitution en différents corps portants.

Suivant un autre mode de réalisation, les axes longitudinaux de deux corps portants sont parallèles ou sensiblement parallèles.

Dans cette configuration, il est aisé de concevoir l'avion avec des corps portants plus ou moins distants, avec deux ou plus corps portants, avec des corps portants spécialisés dans leurs fonctions, par exemple pour le transport de passager, pour le transport de marchandises ou pour le transport de carburant.

Dans un mode de réalisation, au moins une galerie de circulation est agencée dans au moins une des surfaces portantes ou parties de surface portante maintenant entre eux les au moins deux corps portants de sorte à permettre la circulation de personnes entre les aux moins deux corps portants en utilisant la galerie.

Il est ainsi maintenu la possibilité aux personnes de passer d'un corps portant à un autre même lorsque les axes de ces corps portants sont parallèles et que les corps portants ne comportent pas de partie commune.

Dans ce cas, avantageusement, un volume d'une partie de surface portante dans laquelle est agencée la galerie de circulation est aménagé en zones de services ou de repos en dehors de la dite galerie de circulation. Le volume disponible dans la surface portante est accessible par la galerie et ainsi exploité utilement.

Dans une forme de réalisation, l'avion comporte un train d'atterrissage dont des longueurs de jambes de trains sont modifiables pour donner aux corps portants du fuselage, lorsque l'avion est au sol en phase de roulage au décollage ou à l'atterrissage, une portance tantôt positive, dirigée vers le haut, ou tantôt négative, dirigée vers le bas. Il est ainsi utilisé les avantages des corps porteurs du fuselage dans les phases de décollage et d'atterrissage de l'avion, en plus des phases de vol.

### BRÈVE PRÉSENTATION DES DESSINS

Les exemples de réalisation de l'invention décrits de manière détaillée sont présentés en faisant référence aux dessins qui représentent de manière schématique à titre d'exemple, sans caractère limitatif :
- figures 1a, 1b et 1c ; une représentation schématique d'un premier mode de réalisation d'une cellule d'un avion suivant l'invention, en vue de dessus sur la figure 1a, en vue de profil sur la figure 1b et en vue de l'arrière sur la figure 1c ;
- figure 2 : une représentation schématique d'un second mode de réalisation d'une cellule d'un avion suivant l'invention, en vue de dessus :
- figures 3a, 3b, 3c : une représentation schématique d'un exemple de corps portant mis en oeuvre dans les exemples de modes de réalisations des figures 1 et 2, en vue de dessus sur la figure 3a, en vue de profil sur la figure 3b et en vue de l'arrière sur la figure 3c ;
- figure 4 : une représentation simplifiée d'une coupe de surface portante montant une galerie de passage et illustrant un aménagement des volumes jouxtant la galerie :
- figure 5 une représentation de la partie arrière d'un corps portant dans lequel est installé un moteur de propulsion et comportant une prise d'air pour l'alimentation en air du moteur de propulsion ;
- figures 6a, 6b : une illustration des assiettes de l'avion au sol lors de la phase de décollage, figure 6a, et lors de la phase d'atterrissage, figure 6b.

### DESCRIPTION DÉTAILLÉE DE MODES DE RÉALISATION

Sur les dessins des parties représentant des éléments ayant la même fonction, même de formes différentes, sont identifiées par la même référence.

Les éléments représentés sur les différentes figures et les différents éléments d'une même figure ne sont pas nécessairement représentés à l'échelle. En particulier des éléments de détails considérés comme utiles ou importants dans le cadre de l'invention sont au besoin fortement agrandis ou exagérés par rapport aux autres éléments dessinés pour la clarté des illustrations.

Pour les besoins de la description il est autant que de besoin fait référence à trois directions principales telles qu'elles sont utilisées de manière conventionnelle pour un repère avion :
- une direction X longitudinale, parallèle à un axe longitudinal de l'avion, orientée positivement vers l'avant de l'avion ;
- une direction Z verticale, perpendiculaire à la direction X et parallèle à un plan de symétrie vertical d'ensemble de l'avion, orientée positivement vers le bas ;
- une direction Y transversale, perpendiculaire à un plan XZ déterminé par les directions X et Z, orientée positivement vers la droite de l'avion.

Les termes ou expressions "haut", "bas", "intérieur", "extérieur", "droite", "gauche", "vers le haut", "vers le bas", "vers l'intérieur", "vers l'extérieur"... auront sauf précision contraire le sens que leur donnerait une personne dans l'avion en position de pilotage conventionnel. Dans le système d'axe défini, l'axe des Z positifs est donc orienté vers le bas et l'axe des Y positifs vers la droite de l'avion.

Les trois directions X, Y et Z associées à une origine quelconque forment un repère avion.

Par extension, lorsque qu'il s'adresse au cas d'un corps portant isolé, le système d'axe XYZ sera considéré comme le système local du corps portant considéré avec l'axe X suivant la direction de l'axe du corps portant.

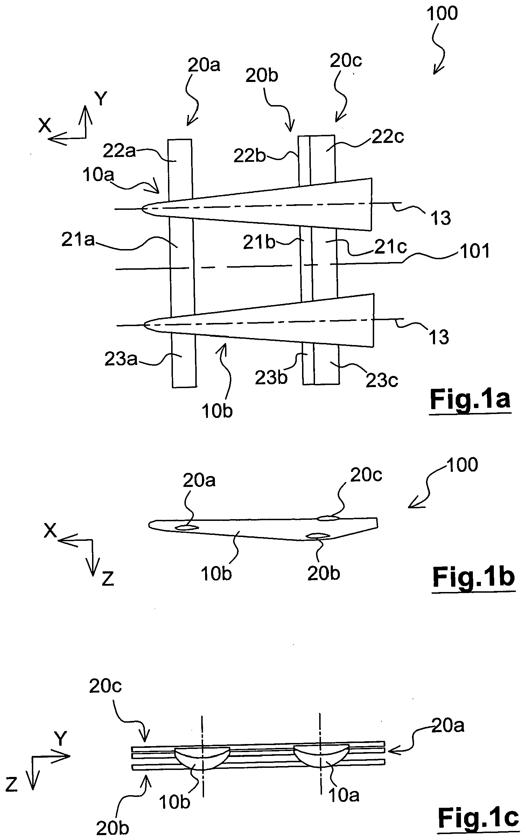

Les figures 1a, 1b et 1c présentent de manière schématique une architecture d'une cellule 100 d'un avion suivant l'invention suivant un premier mode de réalisation.

La cellule 100 est présentée en vue de dessus, figure 1a, en vue de profil, figure 1b, et en vue depuis l'arrière, figure 1c.

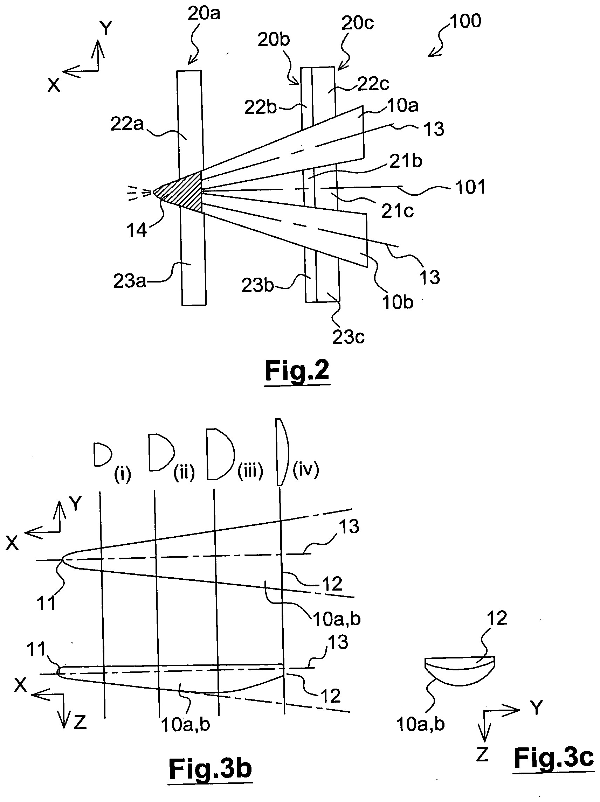

La figure 2 présente en vue de dessus, de manière schématique, une architecture d'une cellule 100 d'un avion suivant l'invention suivant un second mode de réalisation de l'invention voisin du premier mode et s'en distinguant par un agencement de fuselage.

Sur les figures 1a, 1b, 1c et 2 les différents éléments ne sont pas nécessairement représentés à une même échelle et peuvent en pratique présenter des formes et des proportions différentes de celles illustrées à titre d'exemple.

Sur les figures 1a, 1b, 1c et 2, il n'est pas représenté de dispositif de propulsion, la question de l'intégration de moteurs de propulsion dans la cellule d'un avion suivant l'invention sera abordée ultérieurement.

Sur les figures il n'est pas nécessairement représenté de volets, gouvernes ou autres surfaces mobiles. Ces surfaces mobiles, utiles ou nécessaires au contrôle de l'avion, connues de l'homme du métier, ne sont pas l'objet de la présente invention.

La cellule 100 des figures 1a, 1b, 1c ou de la figure 2 comporte un fuselage à deux corps portants 10a, 10b et une voilure comportant une pluralité de surfaces portantes, dans le cas illustré trois surfaces portantes 20a, 20b, 20c.

Chacun des corps portants 10a, 10b du fuselage présente, comme dans l'exemple de corps portant illustré isolé sur la figure 3a en vue de dessus, la figure 3b en vue de profil et la figure 3c en vue depuis l'arrière, une forme d'ensemble d'un demi-cône tronqué dont un sommet 11 est situé à l'avant du fuselage et dont l'extrémité tronquée 12 est située à l'arrière du fuselage.

On comprend qu'en pratique la forme d'ensemble en demi-cône d'un corps portant n'est qu'approximative, les contraintes aérodynamiques, les contraintes structurales et les contraintes d'aménagement pouvant nécessiter de s'éloigner de la forme mathématique du cône.

Une section transversale d'un corps portant, c'est-à-dire une section perpendiculaire à un axe longitudinal 13 du cône, a priori dont la direction correspond dans la cellule 100 à celle de l'axe longitudinal X ou en est voisine, présente une forme en U fermé à sa partie supérieure. Les détails (i), (ii), (iii) et (iv) de la figure 3a représentent un exemple de sections transversales du corps portant et de leur évolution en fonction de la position plus ou moins éloignée du sommet 11 suivant l'axe longitudinal de la section considérée.

Un corps portant 10a, 10b est donc de forme arrondie dans une partie inférieure dudit corps portant et de forme aplatie dans une partie supérieure dudit corps portant.

Il doit être noté que les proportions des sections, le rapport entre une hauteur et une largeur d'une section, ne sont pas constantes et évoluent en fonction de la position sur l'axe longitudinal. En pratique une hauteur minimale du corps portant est maintenue dans une zone de cabine pour prendre en compte les contraintes d'aménagement du fuselage alors que la largeur évolue de manière sensiblement continue.

Il ne sera pas abordé dans la présente description, de détail des structures pouvant réaliser les corps portants, ces corps portant pouvant être réalisés suivant des techniques, tant dans le choix des matériaux que dans celui des techniques d'assemblages, similaires à celles connues de l'homme du métier, en particulier celles mises en oeuvre dans le domaine aéronautique. Il en est de même pour les surfaces portantes et l'assemblage des dites surfaces portantes avec lesdits corps portants.

Dans l'exemple de réalisation illustré sur la figure 1a les deux corps portants 10a, 10b du fuselage sont agencés avec leurs axes longitudinaux 13 situés dans un même plan horizontal et parallèles ou sensiblement parallèles, et parallèles ou sensiblement parallèles à un axe avion 101.

Dans l'exemple de réalisation illustré sur la figure 2 les deux corps portants 10a, 10b du fuselage 10 sont agencés avec leurs axes longitudinaux 13 situés dans un même plan horizontal et convergent, d'un angle compris entre 60 degrés et 10 degrés, de sorte à se rejoindre à l'avant du fuselage, correspondant à l'avant 11 des corps portants, sensiblement aux sommets des demi-cônes formés par lesdits corps portants ou à proximité de sommets théoriques des demi-cônes.

Les surfaces portantes 20a, 20b, 20c sont des ailes ou éléments d'ailes assurant principalement une force de portance aérodynamique lorsqu'elles sont en mouvement relatif par rapport à l'air dans lequel elles sont immergées. L'ensemble desdites surfaces portantes, ailes ou éléments d'aile constitue la voilure de l'avion.

Chaque surface portante 20a, 20b, 20c présente un agencement globalement symétrique, comme dans le cas d'une aile sur un avion conventionnel, mais avec une partie centrale, respectivement 21a, 21b, 21c située entre les deux corps portants 10a, 10b, et deux parties latérales, une sur un côté droit du corps portant 10a situé sur le côté droit de la cellule 100 et une sur un côté gauche du corps portant 10b situé sur le côté gauche de ladite cellule, repérées sur les figures 1 et 2 respectivement 22a, 22b, 22c pour le côté droit et 23a, 23b, 23c pour le côté gauche.

Il doit être remarqué que dans la configuration dans laquelle les corps portants sont agencés avec leurs axes convergents, la partie centrale de la surface portante 20a la plus avant peut ne plus exister, au moins sur le plan aérodynamique, cas de l'exemple illustré sur la figure 2.

Les ailes sont représentées rectangulaires et d'épaisseur constante suivant l'envergure mais elles peuvent avoir toute forme adaptée pour une surface portante.

Ainsi une forme en plan en vue de dessus d'une aile, ou d'une partie centrale 21a, 21b, 21c ou latérale 22a, 22b, 22c, 23a, 23b, 23c, peut être rectangulaire comme dans les exemples illustrés, ou encore trapézoïdale simple ou double, ou encore évolutive par exemple elliptique.

Une partie de l'aile peut présenter une flèche de bord d'attaque et ou de bord de fuite, constante ou fonction d'une position en envergure.

De manière connue, les surfaces portantes sont, pour leurs volumes, définies par des successions de profils adaptés pour créer une circulation de l'air génératrice de portance aérodynamique, par exemple des profils de la famille NACA, dont de nombreux exemples sont publiés dans le document NACA report 824 : « Summary of Airfoil Data », Ira H. Abbot, al, ou de tout autre profil adapté aux conditions de vol prévues pour l'avion 101, en particulier le coefficient de portance en croisière et la vitesse de vol.

De manière générale, les ailes 20a, 20b, 20c peuvent présenter toute caractéristique de forme, de vrillage, d'épaisseur, de dièdre susceptible d'être appliquée à une aile d'avion compte tenu de ses conditions de mise en oeuvre.

Les surfaces portantes 20a, 20b, 20c peuvent être fixées sur les corps portants du fuselage soit en position basse, soit en position haute, soit en position intermédiaire entre une position haute et une position basse.

Le choix d'une telle position en hauteur relève d'une optimisation aérodynamique, de sorte que chaque profil de surface portante travaille sur le plan aérodynamique dans de bonnes conditions, en particulier en raison des interactions de l'écoulement aérodynamique avec les différents corps portants et les différentes surfaces portantes.

Le choix d'une position en hauteur relève également d'une optimisation d'aménagement et de structure, de sorte que l'avion soit adapté aux missions qui en sont attendues et que la structure des différentes parties soit à la fois résistante, possible à assembler économiquement, contrôlable et réparable.

Avantageusement les surfaces portantes seront réparties pour prendre en compte la répartition des masses dans le fuselage, résultant des structures des corps portants et de répartitions des charges utiles, et obtenir des charges massiques par unité de surface (kg / m2) équilibrées entre les différentes surfaces portantes.

Du fait des formes coniques des corps portants, un centre de gravité de chacun des corps portants est a priori, dans l'hypothèse d'une répartition volumique ou surfacique homogène, situé longitudinalement en arrière d'un point milieu entre l'extrémité avant 11 et une extrémité arrière 12 du corps portant considéré.

Pour adapter la répartition de la portance dans ce cas il peut être adapté les dimensions des surfaces portantes en mettant en oeuvre des surfaces portantes plus grandes à l'arrière de l'avion qu'à l'avant, solution non illustrée.

Il peut également être utilisé une répartition des surfaces portantes en mettant en oeuvre des surfaces portantes plus rapprochées à l'arrière de l'avion qu'à l'avant de l'avion.

Dans les exemples illustrés sur les figures 1 et 2, deux surfaces portantes sont fixées au fuselage à l'arrière et une seule à l'avant, cette configuration correspondant à un avion avec trois surfaces portantes n'étant pas limitative du nombre de surfaces portantes susceptibles d'être mises en oeuvre. Dans les formes de réalisation illustrées, les deux surfaces portantes fixées à l'arrière sont décalées en hauteur sur le fuselage pour former une configuration aérodynamique biplan à deux ailes superposées, lesquelles peuvent être décalées longitudinalement d'une fraction de longueur de cordes d'emplanture des surfaces portantes.

Ces différentes possibilités conduisent en général à des compromis qui relèvent des techniques connues de l'homme du métier de la conception des aéronefs.

Dans la cellule 100 de l'avion, les parties centrales 201a, 201b, 201c assurent également, outre une portance, une liaison structurale entre les deux corps portants 10a, 10b.

Ladite liaison structurale maintient les deux corps portants dans une position relative voulue des dits deux corps portants et transmet les efforts liés notamment aux forces d'inertie, aux forces aérodynamiques et aux forces de propulsion s'exerçant sur la cellule 100. Ainsi lesdites parties centrales seront, vis à vis de leurs structures, dimensionnées non seulement par les forces de portance qu'elles génèrent mais également par les efforts à transmettre entre les corps portants.

Dans l'agencement des surfaces portantes, l'avion illustré présente une configuration multiplans sans empennage, en particulier sans empennage horizontal.

Il est ainsi évité, comme dans les configurations aérodynamiques à empennage horizontal canard, de créer des forces d'équilibrage longitudinal s'opposant à la portance L qui pénalise l'avion en termes de performances.

Dans l'avion proposé, la portance nécessaire au vol est répartie sur une pluralité de surfaces portantes, elles-mêmes agencées en plusieurs parties, et sur les corps portants.

Il en résulte des éléments, surfaces ou corps, moins chargés sur le plan de la portance aérodynamique que dans le cas d'une architecture conventionnelle, à conditions de vol équivalentes, et donc des structures plus légères que dans une architecture d'avion conventionnelle dans laquelle les efforts de portance sont concentrés dans l'aile et les efforts de poids et d'inertie sont concentrés dans le fuselage.

En effet, dans l'avion de l'invention, d'une part la masse du fuselage se trouve répartie en envergure sur les surfaces portantes 20a, 20b, 20c en raison des deux corps portants 10a, 10b décalés dans la direction de l'axe Y transversal et en longueur suivant la direction de l'axe X longitudinal sur une pluralité de surface portantes, et d'autre part le fuselage participe à la portance en raison des deux corps portants 10a, 10b le constituant, la portance générée par lesdits corps portants réduisant d'autant la portance devant être assurée par les surfaces portantes.

On comprend ici l'intérêt de mettre en oeuvre un fuselage formé avec au moins deux corps portants.

A capacité de chargement égal, sensiblement à volume constant, un fuselage conventionnel de section circulaire ou ovoïde, contrairement au fuselage de l'avion de l'invention, ne procure pas de portance et voit sa masse concentrée au milieu en envergure de la ou des ailes, lesquelles sont soumises à des moments de flexion maximum plus intenses et donc d'une structure plus complexe et plus lourde.

Dans le cas d'un avion suivant l'invention, en particulier pour un avion civil de transport de passagers, il peut être préféré que la circulation des personnes soit possible entre les deux corps portants 20a, 20b du fuselage.

Dans ce cas, et en particulier dans le premier mode de réalisation dans lequel les axes longitudinaux des deux corps portants sont parallèles, il peut être formée une ou des galeries de circulation dans une ou des parties centrales 21a, 21b, 21c des surfaces portantes.

Il sera dans ce cas utilisé pour la ou les parties centrales concernées un profil aérodynamique présentant une épaisseur maximale suffisante, épaisseur résultant d'une longueur d'une corde de profil aérodynamique et d'une épaisseur relative.

Il doit être noté dans ce cas qu'une épaisseur absolue relativement grande permet de former des liaisons structurales rigides sans pénalité de masse entre les deux corps portants et que, suivant la position d'une galerie de circulation, des fonctions complémentaires de l'avion, par exemple liés à la propulsion ou à des servitudes techniques ou commerciales, peuvent être intégrées dans des volumes de la surface portante qui ne sont pas occupés par la galerie, en particulier dans une zone de bord d'attaque et dans une zone de bord de fuite.

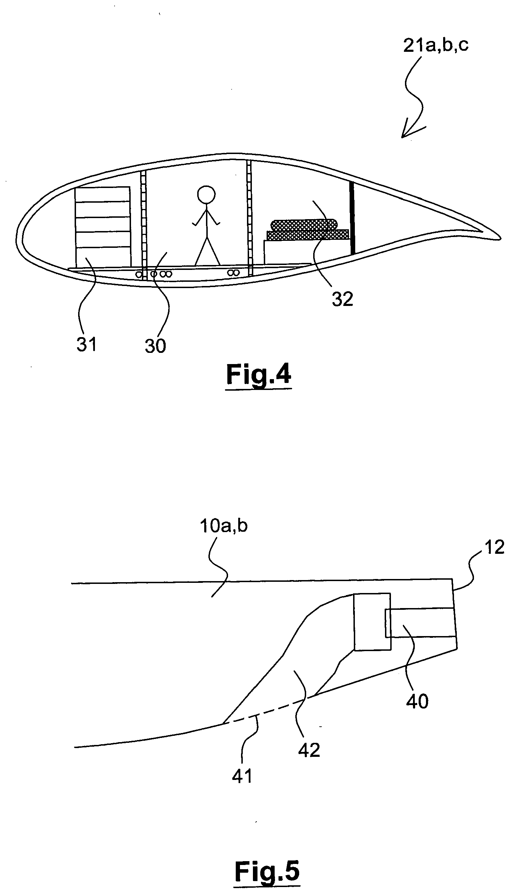

La figure 4 illustre schématiquement une section d'un profil d'une partie centrale 21a, 21b, 21c de surface portante comportant dans sa partie la plus épaisse du profil une galerie 30 de circulation.

Sur cette figure 4, à titre d'exemple d'une utilisation des volumes non occupés par la galerie 30, en avant de ladite galerie, du côté d'un bord d'attaque du profil, est illustrée une zone de stockage 31 par exemple pour des bagages ou des plateaux repas, et en arrière de ladite galerie, du côté d'un bord de fuite du profil, est illustrée une zone de repos 32 pour les membres de l'équipage technique ou commercial de l'avion.

Ces exemples ne sont donnés qu'à titre d'illustration, les volumes disponibles pouvant être mis à profit pour des usages commerciaux, par exemple cuisine ou toilettes, et ou pour des usages techniques, par exemple passages de liaisons électriques, hydrauliques ou d'air conditionné entre les corps portants, voire d'accessoires tels que des batteries électriques ou des groupes auxiliaires de puissance.

On comprend ici que le mode de réalisation illustré sur la figure 1, lorsqu'il est mis en oeuvre pour le transport de passagers dans les deux corps portants, est appliqué de préférence pour des avions de grande capacité dont les dimensions sont suffisantes pour intégrer une partie centrale de surface portante ayant une épaisseur suffisante pour incorporer une galerie de circulation sans créer une pénalité aérodynamique inacceptable.

Le mode de réalisation de la figure 1 peut également être mis en oeuvre sans galerie de circulation entre les deux corps portants.

Si la nécessité d'une telle galerie est probable pour des raisons psychologiques et de sécurité lorsque des passagers sont transportés dans les deux corps portants, une telle galerie peut être considérée comme superflue si chacun des corps portants est spécialisé, l'ensemble des passagers et de l'équipage étant alors réparti dans un seul corps portant.

Une telle configuration correspond par exemple au cas d'un fuselage dont un corps portant assure le transport des passagers et dont l'autre corps portant est consacré au transport de bagages et ou de marchandises et ou de carburant.

Le volume disponible dans un des corps portants permet en particulier l'utilisation de carburants de faible densité, par exemple de l'hydrogène liquide, qui exige des capacités d'emport en volume bien supérieures à celles nécessaires avec les carburants conventionnels du type kérosène.

Dans ces cas, il est possible de mettre en oeuvre la configuration de la figure 1 pour un avion de dimensions modestes, avec des capacités d'emport de passagers par exemple inférieures à 200.

En outre, lorsque la possibilité d'une intervention humaine dans le corps portant non habité doit être maintenue, il est avantageusement réalisé un boyau de passage dans une ou des parties centrales 20a, 20b, 20c des surfaces portantes. Dans ce cas, un tel boyau est de section suffisante pour permettre le passage en rampant, ou transporté étendu sur un chariot roulant, d'un personnel de l'équipage technique.

Le mode de réalisation illustré sur la figue 2 permet l'application des mêmes solutions que celles considérées pour le mode de réalisation de la figure 1.

Le mode de réalisation de la figure 2 permet en outre de manière conjointe ou alternative avec les solutions exposées précédemment de former un passage pour les passagers et pour l'équipage entre les deux corps portants dans une zone avant de jonction des dits deux corps portants.

Dans ce cas, il est réalisé un recouvrement, matérialisé par une zone hachurée sur la figure 2, suffisant des extrémités avant des deux corps portants pour qu'il soit disponible, dans ladite zone de recouvrement, une zone de passage présentant une hauteur et une largeur adaptées au flux de la circulation prévue des personnes, en vol ou au sol lors des opérations d'embarquement et de débarquement des passagers. Il est avantageusement agencé dans le fuselage, au niveau de la zone de recouvrement ou à proximité de cette zone de recouvrement, une porte de chargement principalement destinée aux passagers dont une largeur est suffisante pour permettre un flux de passagers à l'embarquement se séparant, après le passage de ladite porte, pour se diriger pour une partie directement vers un des fuselages porteurs et pour l'autre partie via une voie de circulation de la zone de recouvrement, vers l'autre fuselage porteur.

Dans le cas de galeries de circulation entre les corps portants d'un fuselage, les issues pour l'embarquement et le débarquement seront avantageusement situées proches desdites galeries.

Il est dans ces cas possible de doubler, au moins en théorie, la vitesse d'embarquement à bord de l'avion avec les avantages commerciaux et économiques importants correspondants, en particulier pour un avion gros porteur.

Les extrémités avant des corps portants peuvent être plus ou moins effilées.

En pratique, la forme est adaptée aux contraintes aérodynamiques et d'intégration d'un poste de pilotage.

Ainsi la partie avant des corps portants peut être similaire à celle d'un fuselage d'avion conventionnel, en particulier pour l'intégration d'un poste de pilotage donnant aux pilotes les conditions, telles que volume et visibilité, nécessaire à la conduite du vol et à la gestion de l'avion.

Pour assurer une stabilité et un contrôle en lacet, en rotation autour de l'axe vertical Z, l'avion peut être pourvu de dérives, non représentées, avantageusement pourvues de gouvernes de direction. De manière connue, les dérives sont fixées sur le fuselage, par exemple sur chacun des corps portants 10a, 10b, et ou sur des surfaces portantes, par exemple à des extrémités des surfaces portantes les plus arrières.

La propulsion d'un avion tel que l'avion des figures 1 ou 2 peut être assuré par tout type de propulseur adapté à la propulsion d'un avion, par exemple des turboréacteurs ou des turbopropulseurs.

Dans une forme de réalisation un moteur de propulsion agencé pour générer une poussée vers l'avant, ou un groupe auxiliaire de puissance, est intégré dans une partie arrière d'au moins un corps portant.

Dans une forme de réalisation, représentée schématiquement sur la figure 5, une entrée d'air 41 alimente en air un moteur de propulsion 40 à l'arrière du corps portant 10a, 10b. L'entrée d'air 41 peut être une entrée d'air à la surface de la paroi du fuselage, par exemple une prise d'air de type NACA, qui alimente un canal 42 apportant au moteur le débit d'air attendu. L'entrée d'air peut également être construite avec une forme en écope, non représentée, une ou plusieurs écope, voire une forme annulaire dont le corps portant est au centre.

Seuls, ou en combinaison avec des moteurs de propulsion agencés dans le ou les corps portants, des moteurs de propulsion peuvent être fixés sur des surfaces portantes en mettant en oeuvre les solutions connues pour fixer un moteur à une aile d'un avion conventionnel.

Dans une méthode de mise en oeuvre d'un avion suivant l'invention, la portance créée par les corps portants 10a, 10b du fuselage est mise à profit pendant le roulage des phases de décollage et d'atterrissage en agissant sur des caractéristiques d'un train d'atterrissage de l'avion pour donner à chacun des corps portants une incidence optimisée suivant la phase de roulage.

Lors du décollage, il sera adopté des longueurs de jambes de train d'atterrissage de sorte que la poussée produite par les moteurs de propulsion soit sensiblement horizontale avec une incidence des corps portants produisant une portance, évitant une rotation excessive au décollage, et la création d'une composante de la poussée des moteurs perpendiculaire à la trajectoire de l'avion, de sorte à optimiser l'accélération au roulage et lors de la phase initiale de l'envol.

A contrario, lors des phases d'atterrissage, il est agit sur la longueur des jambes de trains d'atterrissage pour mettre les corps portants en position d'incidence négative et favoriser une déportance des corps portants et augmenter les efforts sur les roues et les capacités de freinage.

Les capacités de changement d'assiette au sol de l'avion sont obtenues au moyen de jambes de train d'atterrisseur dont les longueurs sont modifiables.

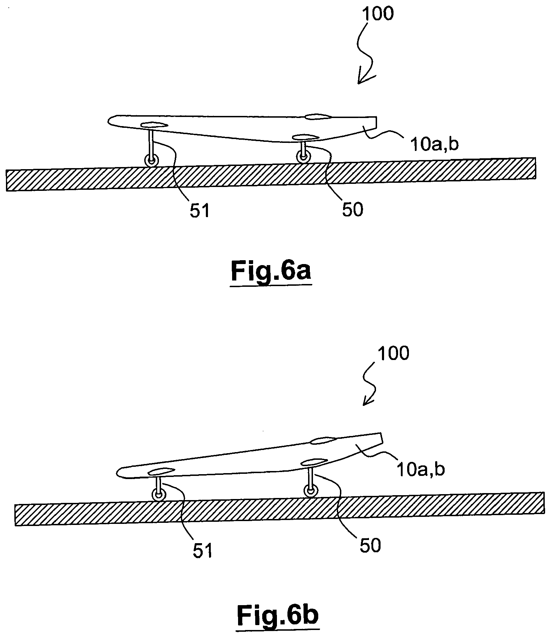

Comme symbolisé sur les figures 6a et 6b, il est par exemple agi sur une longueur de jambe d'atterrisseur avant 51 pour modifier, à longueur de jambes d'atterrisseurs principaux 50 constante, l'assiette au sol de l'avion reposant sur ses roues.

Sur la figure 6a, la jambe de train avant 41 est positionnée avec une longueur maximale de sorte que les corps portants 10a, 10b sont, lors du roulage au sol, avec une incidence assurant auxdits corps portants une portance positive.

Sur la figure 6b, la jambe de train avant 41 est positionnée avec une longueur minimale de sorte que les corps portants 10a, 10b sont, lors du roulage au sol, avec une incidence assurant auxdits corps portants une portance négative ou déportance.

La figure 6a correspond à une configuration adaptée à la phase de décollage et la figure 6b correspond à une configuration adaptée à la phase d'atterrissage. Potentiellement, dans ce dernier cas, si la force de traînée aérodynamique est suffisante au roulage à l'atterrissage, il peut être évité l'utilisation des moteurs de propulsion de l'avion dans un mode «inverseur de poussée», ou pour le moins d'en limiter l'usage.

Il également possible de réaliser les modifications d'assiette au roulage en agissant sur les longueurs des jambes des atterrisseurs principaux seuls ou en combinaison avec celles de l'atterrisseur avant.

Bien que décrit avec deux corps portants, l'avion de l'invention peut comporter un nombre plus important de corps portants, en particulier trois corps portants.

Dans une configuration à trois corps portants, il sera préféré une configuration symétrique avec un corps portant agencé dans l'axe du fuselage, le dit corps portant agencé dans l'axe n'ayant pas nécessairement la même forme et les mêmes dimensions que les autres corps portants.

Les surfaces portantes peuvent être en nombre différent de trois, mais au moins deux.

Les surfaces portantes peuvent être de dimensions différentes, en surfaces aérodynamiques, en envergures et en cordes, ainsi qu'en formes en plan.

En particulier, les surfaces portantes peuvent être limitées, au moins pour certaines d'entre elles, aux parties centrales, 21a, 21b, 21c située entre les deux corps portants 10a, 10b dont elles assurent sur le plan de la structure une liaison mécanique qui en assure une rigidité structurale adaptée.

En pratique, les surfaces aérodynamiques apportent la portance nécessaire aux différentes phases de vol en complément de la portance apportée par les corps portants du fuselage et l'équilibre des forces de portance pour prendre en compte la répartition des masses de l'avion. Ces exigences se traduisent par des dimensions et des répartitions des surfaces portantes. De plus, l'homme du métier choisira les profils des différentes surfaces portantes et leurs calages en incidence pour que les voilures avant atteignent une incidence avion de décrochage avant les voilures arrières, en sorte d'obtenir un comportement sain de l'avion au décrochage aérodynamique avec une abattée favorable à une reprise de contrôle de l'avion.

Dans le premier mode de réalisation à fuselage à axes parallèles, une distance de séparation entre les deux corps portants est avantageusement déterminée en fonction des besoins de portance devant être apportés par les surfaces portantes de sorte à limiter, voire éviter, les parties de surfaces portantes en porte-à-faux.

En outre, les parties centrales des surfaces portantes bénéficient d'un effet de cloisons produit par les corps portants qui réduisent les tourbillons marginaux et procurent un effet d'allongement aérodynamique ayant pour résultat de diminuer la traînée induite par la portance des dites surfaces portantes.

## Revendications

1. Avion comportant un fuselage et une pluralité de surfaces portantes (20a, 20b, 20c), dont le fuselage comporte au moins deux corps portants (10a, 10b), juxtaposés dans un plan horizontal d'un système d'axe de référence XYZ lié à l'avion, les dits au moins deux corps portants étant maintenus entre eux par toutes ou parties des dites surfaces portantes, **caractérisé en ce que** chaque corps portant (10a, 10b) présente une forme d'ensemble de demi-cône tronqué dont des sections perpendiculaires à un axe longitudinal (13) du cône présentent une forme arrondie dans une partie inférieure et une forme aplatie dans une partie supérieure, une partie effilée dudit demi-cône étant située du côté d'une extrémité avant (11) de l'avion et une partie tronquée étant située du côté d'une extrémité arrière (12) de l'avion, ladite partie tronquée étant en outre d'une hauteur HC, suivant une direction verticale définie par un axe vertical Z du système d'axe de référence, inférieure à la hauteur théorique de la forme conique à la position considérée sur l'axe longitudinal.

2. Avion suivant la revendication 1 dans lequel toutes ou parties des surfaces portantes (20a, 20b, 20c) comportent des parties en porte-à-faux en formes d'ailes allongées en envergure sur des cotés externes des corps portants (10a, 10b) par rapport à un axe longitudinal (101) de l'avion.

3. Avion suivant l'une des revendications précédentes dans lequel un corps portant (10a, 10b) comporte au moins une entrée d'air (41) située sur une surface dudit corps portant, dans une partie arrière dudit corps portant dans laquelle une hauteur du corps portant décroît vers l'arrière.

4. Avion suivant la revendication 3 dans lequel l'entrée d'air (41) est du type NACA.

5. Avion suivant l'une des revendications précédentes dans lequel au moins un moteur (40) est agencé dans une partie arrière d'un corps portant (10a, 10b) de sorte à générer une force opposée à la traînée aérodynamique en vol de l'avion.

6. Avion suivant l'une des revendications précédentes dans lequel les surfaces portantes (20a, 20b, 20c) sont agencées par rapport au fuselage pour former une surface portante à l'avant et pour former deux surfaces portantes superposées, au moins partiellement, à l'arrière.

7. Avion suivant l'une des revendications 1 à 6 dans lequel les axes longitudinaux (13) de deux corps portant (10a, 10b) convergent vers l'avant et se rejoignent dans une partie commune du fuselage.

8. Avion suivant la revendication 7 dans lequel une zone de passage (14) d'un corps portant à un autre est aménagée dans la partie commune de fuselage pour permettre la circulation de personnes.

9. Avion suivant l'une des revendications 1 à 6 dans lequel les axes longitudinaux (13) de deux corps portants (10a, 10b) sont parallèles ou sensiblement parallèles.

10. Avion suivant l'une des revendications précédentes dans lequel au moins une galerie (30) de circulation est agencée dans au moins une des surfaces portantes ou parties de surface portante (21a, 21b, 21c) maintenant entre eux les au moins deux corps portants (10a, 10b) de sorte à permettre la circulation de personnes entre les dits aux moins deux corps portants.

11. Avion suivant la revendication 10 dans lequel un volume d'une partie de surface portante (21a, 21b, 21c) dans laquelle est agencée une galerie (30) de circulation est aménagé en zones de services ou de repos en dehors de la dite galerie de circulation.

12. Avion suivant l'une des revendications précédentes comportant un train d'atterrissage dont des longueurs de jambes de trains (50, 51) sont modifiables pour donner aux corps portants (10a, 10b) du fuselage, lorsque l'avion est au sol en phase de roulage au décollage ou à l'atterrissage, une portance tantôt positive, dirigée vers le haut, ou tantôt négative, dirigée vers le bas.

## Patentansprüche

1. Flugzeug, umfassend einen Rumpf und mehrere Tragflächen (20a, 20b, 20c), dessen Rumpf mindestens zwei Auftriebskörper (10a, 100b) aufweist, die in einer horizontalen Ebene eines Bezugsachsensystems X Y Z, das mit dem Flugzeug verbunden ist, nebeneinander angeordnet sind, wobei die mindestens zwei Auftriebskörper durch alle oder Teile der Tragflächen zusammengehalten sind, **dadurch gekennzeichnet, dass** jeder Auftriebskörper (10a, 10b) eine Gesamtform eines halbierten Kegelstumpfs aufweist, wovon Abschnitte senkrecht zu einer Längsachse (13) des Kegels eine abgerundete Form in einem unteren Teil und eine abgeflachte Form in einem oberen Teil aufweisen, wobei sich ein sich verjüngender Teil des Halbkegels auf der Seite eines vorderen Endes (11) des Flugzeugs befindet und sich ein kegelstumpfförmiger Teil auf der Seite eines hinteren Endes (12) des Flugzeugs befindet, wobei der kegelstumpfförmige Teil ferner eine Höhe HC in einer vertikalen Richtung aufweist, die durch eine vertikale Achse Z des Bezugsachsensystems definiert ist, die niedriger als die theoretische Höhe der konischen Form an der betreffenden Position auf der Längsachse ist.

2. Flugzeug nach Anspruch 1, wobei alle oder Teile der Tragflächen (20a, 20b, 20c) überhängende Teile in Form von Flügeln aufweisen, die in der Spannweite an den Außenseiten der Auftriebskörper (10a, 10b) relativ zu einer Längsachse (101) des Flugzeugs verlängert sind.

3. Flugzeug nach einem der vorhergehenden Ansprüche, wobei ein Auftriebskörper (10a, 10b) mindestens einen Lufteinlass (41) aufweist, der auf einer Fläche des Auftriebskörpers in einem hinteren Teil des Auftriebskörpers angeordnet ist, in dem eine Höhe des Auftriebskörpers nach hinten abnimmt.

4. Flugzeug nach Anspruch 3, wobei der Lufteinlass (41) des Typs des NACA-Lufteinlasses ist.

5. Flugzeug nach einem der vorhergehenden Ansprüche, wobei mindestens ein Motor (40) in einem hinteren Teil eines Auftriebskörpers (10a, 10b) derart angeordnet ist, um eine Kraft zu erzeugen, die dem Luftwiderstand im Flug des Flugzeugs entgegengesetzt ist.

6. Flugzeug nach einem der vorhergehenden Ansprüche, wobei die Tragflächen (20a, 20b, 20c) gegenüber dem Rumpf angeordnet sind, um eine Tragfläche vorne zu bilden und um zwei, mindesten teilweise überlagerte Tragflächen hinten zu bilden.

7. Flugzeug nach einem der Ansprüche 1 bis 6, wobei die Längsachsen (13) der zwei Auftriebskörper (10a, 10b) nach vorne konvergieren und in einem gemeinsamen Teil des Rumpfes zusammenlaufen.

8. Flugzeug nach Anspruch 7, wobei ein Durchgangsbereich (14) von einem Auftriebskörper zum anderen in dem gemeinsamen Teil des Rumpfes ausgebildet ist, um das Durchgehen von Personen zu ermöglichen.

9. Flugzeug nach einem der Ansprüche 1 bis 6, wobei die Längsachsen (13) der zwei Auftriebskörper (10a, 10b) parallel oder im Wesentlichen parallel sind.

10. Flugzeug nach einem der vorhergehenden Ansprüche, wobei mindestens eine Durchgangsgalerie (30) in mindestenS einer der Tragflächen oder Teilen der Tragfläche (21a, 21b, 21c) ausgebildet ist, die zwischen sich mindestens zwei Auftriebskörper (10a, 10b) derart halten, um das Durchgehen von Personen zwischen den mindestens zwei Auftriebskörpern zu ermöglichen.

11. Flugzeug nach Anspruch 10, wobei ein Volumen eines Teils einer Tragfläche (21a, 21b, 21c), in der eine Durchgangsgalerie (30) ausgebildet ist, als Service- oder Ruhebereiche außerhalb der Durchgangsgalerie eingerichtet ist.

12. Flugzeug nach einem der vorhergehenden Ansprüche, umfassend ein Fahrwerk, wovon Längen der Tragwerkbeine (50, 51) veränderbar sind, um den Auftriebskörpern (10a, 10b) des Rumpfes mal eine positive Auftriebskraft, die nach oben gerichtet ist, oder mal eine negative Auftriebskraft, die nach unten gerichtet ist, zu geben, wenn das Flugzeug in der Rollführungsphase beim Start oder beim Landen am Boden ist.

## Claims

1. Aeroplane comprising a fuselage and a plurality of lifting surfaces (20a, 20b, 20c), of which the fuselage comprises at least two lifting bodies (10a, 10b), juxtaposed in a horizontal plane of a reference axis system XYZ linked to the aeroplane, said at least two lifting bodies being held together by all or parts of said lifting surfaces, **characterized in that** each lifting body (10a, 10b) has an overall truncated half-cone form whose sections at right angles to a longitudinal axis (13) of the cone exhibit a rounded form in a lower part and a flattened form in an upper part, a tapered part of said half-cone being situated on the side of a front end (11) of the aeroplane and a truncated part being situated on the side of a rear end (12) of the aeroplane, said truncated part being also of a height HC, in a vertical direction defined by a vertical axis Z of the reference axis system, lower than the theoretical height of the conical form at the position considered on the longitudinal axis.

2. Aeroplane according to Claim 1, in which all or parts of the lifting surfaces (20a, 20b, 20c) comprise cantilevered parts in the forms of wings elongate in span on outer sides of the lifting bodies (10a, 10b) relative to a longitudinal axis (101) of the aeroplane.

3. Aeroplane according to one of the preceding claims, in which a lifting body (10a, 10b) comprises at least one air inlet (41) situated on a surface of said lifting body in a rear part of said lifting body in which a height of the lifting body decreases rearwards.

4. Aeroplane according to Claim 3, in which the air inlet (41) is of the NACA type.

5. Aeroplane according to one of the preceding claims, in which at least one engine (40) is arranged in a rear part of a lifting body (10a, 10b) so as to generate a force opposing the aerodynamic drag in flight of the aeroplane.

6. Aeroplane according to one of the preceding claims, in which the lifting surfaces (20a, 20b, 20c) are arranged relative to the fuselage to form a lifting surface at the front and to form two at least partially superposed lifting surfaces at the rear.

7. Aeroplane according to one of Claims 1 to 6, in which the longitudinal axes (13) of two lifting bodies (10a, 10b) converge toward the front and meet in a common part of the fuselage.

8. Aeroplane according to Claim 7, in which a zone of passage (14) from one lifting body to another is formed in the common fuselage part to allow people to move around.

9. Aeroplane according to one of Claims 1 to 6, in which the longitudinal axes (13) of two lifting bodies (10a, 10b) are parallel or substantially parallel.

10. Aeroplane according to one of the preceding claims, in which at least one gallery (30) for moving around is arranged in at least one of the lifting surfaces or lifting surface parts (21a, 21b, 21c) holding between them the at least two lifting bodies (10a, 10b) so as to allow people to move around between said at least two lifting bodies.

11. Aeroplane according to Claim 10, in which a volume of a lifting surface part (21a, 21b, 21c) in which a gallery (30) for moving around is arranged is formed in service or rest zones outside of said gallery for moving around.

12. Aeroplane according to one of the preceding claims, comprising a landing gear of which the lengths of the gear legs (50, 51) are modifiable to give the lifting bodies (10a, 10b) of the fuselage, when the aeroplane is on the ground in taxi phase on take-off or on landing, a lift that is sometimes positive, directed upwards, and sometimes negative, directed downwards.
